(19) Europäisches Patentamt / European Patent Office / Office européen des brevets

(11) **EP 3 691 402 B1**

(12) **EUROPEAN PATENT SPECIFICATION**

(45) Date of publication and mention
of the grant of the patent:
**28.06.2023 Bulletin 2023/26**

(21) Application number: **19155103.5**

(22) Date of filing: **01.02.2019**

(51) International Patent Classification (IPC):
**H04W 24/02** (2009.01)     **H04W 76/30** (2018.01)

(52) Cooperative Patent Classification (CPC):
**H04W 76/30; H04W 24/02**

(54) **CONTROLLING COMMUNICATION CHANNELS IN AN ULTRA-DENSE NETWORK**

STEUERUNG VON KOMMUNIKATIONSKANÄLEN IN EINEM ULTRADICHTEN NETZWERK

CONTRÔLE DES CANAUX DE COMMUNICATION DANS UN RÉSEAU ULTRA-DENSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.08.2020 Bulletin 2020/32**

(73) Proprietor: **Nokia Solutions and Networks Oy
02610 Espoo (FI)**

(72) Inventor: **Gacanin, Haris
2018 Antwerpen (BE)**

(74) Representative: **IP HILLS NV
Hubert Frère-Orbanlaan 329
9000 Gent (BE)**

(56) References cited:
**WO-A1-2015/109441     WO-A1-2017/017564
US-A1- 2010 265 813**

- **NADERIALIZADEH NAVID ET AL:
"Feedback-Based Interference Management in
Ultra-Dense Networks via Parallel Dynamic Cell
Selection and Link Scheduling", 2018 IEEE
INTERNATIONAL CONFERENCE ON
COMMUNICATIONS (ICC), IEEE, 20 May 2018
(2018-05-20), pages 1-6, XP033378909, DOI:
10.1109/ICC.2018.8422927 [retrieved on
2018-07-27]**

## Description

### Technical Field

Various example embodiments relate to controlling communication channels between transmitter and receiver nodes in an ultra-dense network, UDN.

### Background

In an UDN the number of communication links per unit area are extremely densified. Wireless systems in an UDN comprise an extreme densification having cell-free infrastructure due to diminishing cell sizes. For example, tens of Tb/s/km$^2$ is required for offices areas, one million connections per km$^2$ in densely populated areas such as open public venues, and super high density of over six persons per square meter in underground transportation systems.

WO 2015/109441 A1 discloses methods and apparatuses for avoiding or at least reducing the interference taking place between wireless networks by coordinating resource scheduling between wireless networks.

N. Naderializadeh, H. Nikopour, O. Orhan and S. Talwar, "Feedback-Based Interference Management in Ultra-Dense Networks via Parallel Dynamic Cell Selection and Link Scheduling," 2018 IEEE International Conference on Communications (ICC), Kansas City, MO, 2018, pp. 1-6, discloses a method for parallel dynamic cell selection and link scheduling to simultaneously activate a subset of non-interfering transmitter-receiver links to manage the interference in an ultra-dense network setting.

### Summary

Since the trend of network densification continues, networks with multiple transmitter or connectivity nodes, such as wireless extenders, are utilized to expand the coverage area for receiver nodes, such as user devices.

When using traditional communication systems in ultra-dense environments the performance of communication degrades due to ultra-short range of communications.

Amongst others, it is an object of embodiments of the present disclosure to provide a solution that improves communication links in an UDN in an efficient manner.

This object is achieved, according to a first example aspect of the present disclosure, by the controller circuitry according to claim 1.

The UDN comprises a number of transmitter and receiver nodes, wherein in a dense network, the transmitter as well as the receiver nodes may be located close to each other.

A receiver node, such as a user device, may communicate with one or more transmitter nodes, which may thus be regarded as access point in the UDN. This is a multiple-input multiple-output, MIMO, whereby a plurality of communication channels between the transmitter and receiver nodes arises. Each link between a transmitter and a receiver node is regarded as a pair.

Simultaneously, a receiver node may be linked to only one transmitter node in a single-input single-output set-up, whereby, likewise a link between a transmitter and receiver node in this set-up is regarded as a pair.

Such a dense network set-up leads to short range and spatially co-located communication with high channel correlations between the transmitter and receiver nodes. When a receiver node communicates with a transmitter node, and at the same time another receiver node communicates with the same transmitter node, while the two receiver nodes are located very close to each other in the UDN, interference between the two channel arises. The communication channels then become correlated and degrade the functioning of the UDN. Likewise, a receiver node may simultaneously communicate with two transmitter nodes close to each other, such that the same problem of interference arises.

However, since traditional communication systems rely on an assumption of uncorrelated communication channels between transmitter and receiver nodes, the performance of the UDN will degrade because of such interference. Therefore, the controller circuitry controls the communication channels in the UDN to enhance the performance thereof.

Firstly, the controller circuitry monitors the communication channels of pairs of the transmitter-receiver nodes. In other words, the current network state is perceived.

Secondly, for each pair of transmitter-receiver node a correlation coefficient is determined. Next, based on these correlation coefficients, correlated pairs are identified and, subsequently, these links are dropped or disconnected.

By disconnecting correlated pairs of communication channels or links, these links are decorrelated. This is an advantage, since in ultra-dense environments channels will not become un-correlated by the mobility of the receiver node itself due to ultra-short range of communications. In other words, the decorrelation is forced by disconnecting of dropping the correlated links. This way, performance degradation of the UDN is avoided.

Thirdly, the means are further configured to connect a receiver node of a disconnected pair to another transmitter node. After correlated pairs are disconnected, the receiver node belonging to a disconnected pair is connected to another transmitter node, thus a transmitter node different from the correlated pair.

According to example embodiments, the means are further configured to:

- storing the correlation coefficients during consecutive predefined time-intervals; and

wherein the identifying of the correlated pairs is further based on the stored correlation coefficients.

During consecutive predefined time-intervals, the correlation coefficients for the pairs are determined, and these determined coefficients are stored in, for example, a knowledge base. This way, past experiences of the UDN are observed and the identified correlated communication links between pairs are further based on these past experiences. This way, the identification of the correlated pairs becomes more accurate.

Additionally, the means are further configured to:

- calculating a reward when the receiver node is connected to the other transmitter node; and

wherein the storing further comprises storing the reward for the transmitter-receiver pair.

Based on a previous action, thus either automatically connecting the receiver node to another transmitter node, either instructing the receiver node to connect to another transmitter node, a reward is calculated after that the receiver node is connected to the transmitter node. The reward is indicative for a success rate for the new established communication link of the receiver node with the other transmitter node. Subsequently, the reward is stored in the knowledge base. The stored reward is then associated to an entry in the knowledge base linked with the transmitter-receiver pair and correlation coefficient.

According to example embodiments, the reward is based on the receiver node's mobility.

The receiver's node mobility may, for example, be determined by the doppler effect or doppler shift of the wavelengths used for exchanging data over the communication channels. Another way to determine the receiver node's mobility is, for example, by a global positioning system, GPS, tracking means present in the receiver node.

Additionally, the mobility is based on an achievable throughput over a demanded throughput of the receiver node.

The mobility can further be determined or estimated as the ratio between an achievable performance metric, this is the achievable throughput, and a target performance metric, this is the demanded throughput, of the receiver node.

According to further example embodiments, the identifying of correlated pairs is further based on the rewards.

The stored calculated rewards are then further used, additionally to the correlation coefficients, to determine correlated pairs.

According to further example embodiments, the monitoring of the communication channels is performed for a cluster of transmitter-receiver nodes in the communication network.

The communication network, e.g. UDN, may comprise a plurality of clusters, wherein in a cluster comprises receiver nodes connected to a same transmitter node. Because of the set-up of the UDN, a receiver node may further simultaneously be connected to another cluster. The controller circuitry may then, in a first stage, control receiver nodes of one cluster before passing further to a next cluster.

According to a second example the method according to claim 8 is disclosed.

According to a third aspect the computer program product according to claim 9 is disclosed.

According to a fourth aspect the computer readable storage medium according to claim 10 is disclosed.

## Brief Description of the Drawings

Some example embodiments will now be described with reference to the accompanying drawings.

Fig. 1 shows an example embodiment of an ultra-dense network; and

Fig. 2 shows an example embodiment of pairs of transmitter and receiver nodes; and

Fig. 3 shows an example embodiment of a suitable computing system for performing one or several steps in embodiments of the invention; and

Fig. 4 shows an example embodiment of steps performed for controlling communication channels between transmitter and receiver nodes in a multiple-input multiple-output ultra-dense network.

## Detailed Description of Embodiment(s)

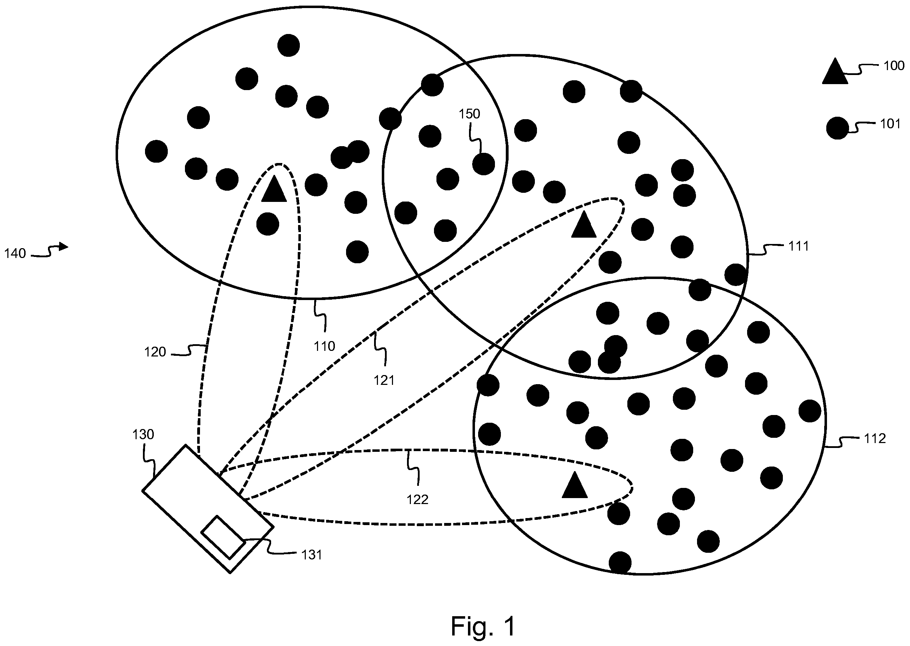

In Fig. 1 an ultra-dense network (UDN) is illustrated. The UDN 140 comprises receiver nodes, illustrated as circles 101, and transmitter nodes, illustrated as triangles 100. The UDN 140, further nominated as UDN 140, further comprises a wireless feeder 130. Through the wireless feeder 130, the transmitter nodes extend the signal originating from the wireless feeder 130 such that clusters 110-112 arise. Within these clusters 110-112 receiver nodes 101 may communicate via the transmitter nodes 100 with the wireless feeder 130.

The connections between the transmitter nodes 100 and the wireless feeder 130 are further illustrated by the dotted ellipses 120-122.

A receiver node may further be located within different clusters, such as receiver node 150, which is located within cluster 110 and cluster 111. This way, the receiver node 150 is able to communicate with two different transmitter nodes.

The clusters 110-112 are formed to maximise a distance between edge users or receiver nodes 101 between the clusters 110-112.

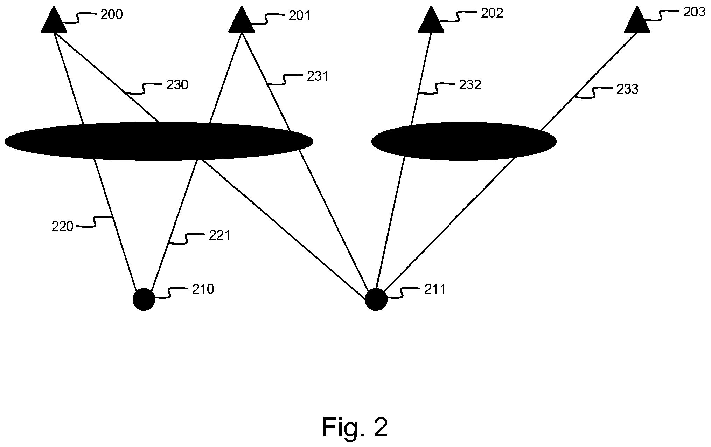

Fig. 2 illustrates another set-up wherein a receiver node may communicate with different transmitter nodes through different communication channels. For example, receiver node 210 communicates with transmitter nodes 200 and 201 through the communication channels 220 respectively 221. Likewise, receiver node 211 communicates with transmitter nodes 200-203 through communication channels 230-233. Each connection between a transmitter and a receiver is thus a pair of transmitter-receiver.

Through a controller circuity 131 communication channels 220-221 and/or 230-233 between receiver nodes 210, 211 and transmitter nodes 200-203 are controlled. The controller circuitry 131 is illustrated as incorporated in the wireless feeder 130, but it should be further understood that the controller circuitry 131 may also be located remotely from the wireless feeder 130 and communicate with the wireless feeder 130 through communication means.

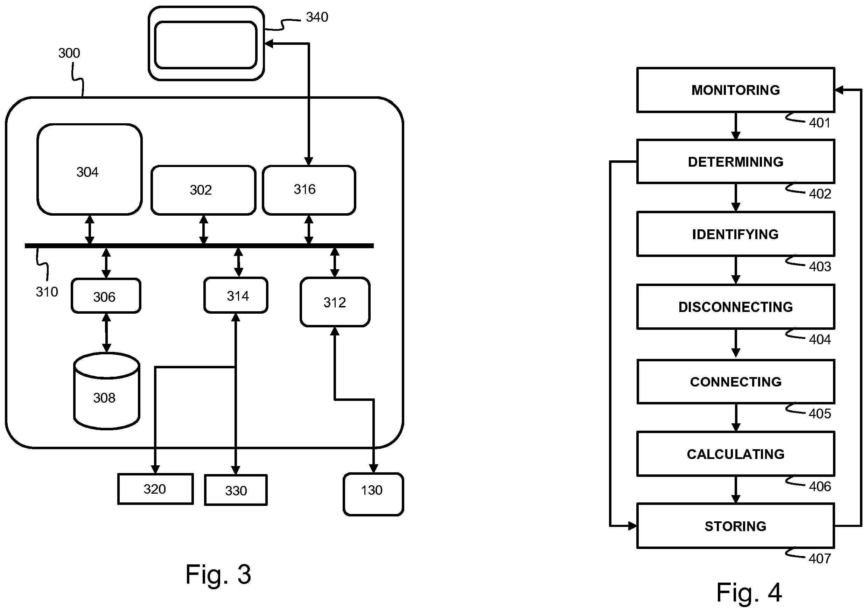

The steps performed by the controller circuitry 130 will now be further illustrated with reference to Fig. 4 which illustrates steps performed to control the communication channels 220-221, and/or 230-233.

In a first step, the environment is monitored 401, that is the current network state of the UDN 140 is observed. Next, through the monitoring 401 or observing of the UDN 140, for each communication channel 220-221, 230-233, a correlation coefficient is determined 402. Thus, per channel a tuple of receiver node to transmitter node, thus a pair of transmitter-receiver node, a correlation coefficient is calculated 402. These determined 402 correlation coefficients may further be stored 407 in a knowledge base.

When a communication channel is represented as $h_{um}$, with $u$ an uth receiver node and m an mth transmitter node, a correlation coefficient at time $l$ may be expressed as:

$$r_{um}(l) = \sum_n h_{um}(n)\, h_{um}^*(n-l) \qquad \text{(Eq.1),}$$

with $n$ the number of samples and * the complex conjugate operator.

For the UDN a cross-relation matrix R comprising correlation coefficients is then:

$$R = \begin{pmatrix} r_{11} & \cdots & r_{1M} \\ \vdots & \ddots & \cdots \\ r_{K1} & \cdots & r_{KM} \end{pmatrix} = \begin{pmatrix} \vec{r}_1 \\ \vdots \\ \vec{r}_K \end{pmatrix} \qquad \text{(Eq.2),}$$

where

$$n \to 1-K \ and \ m \to 1-M \qquad \text{(Eq.3),}$$

with K the number of receiver nodes, and M the number of transmitter nodes.

The correlation coefficient may then be used to sort quality of communication channels in the UDN.

Next, based on the determined 402 coefficients, correlated communication links are identified 403 between receiver nodes 210-211 and transmitter nodes 200-203. Through past experiences stored 407 in the knowledge base correlated communication channels may likewise be identified and stored 407 for different time instances.

Based on these identified 403 correlated communication links, links that are in correlation are dropped and/or disconnected 404. Further, feedback is assigned to receiver nodes 210-211 to connect 405 to another transmitter node. Next, when connected 405 to another transmitter node, a reward is calculated 406 based on the action that was taken to associate to the other transmitter node and stored 407 in the knowledge base. The calculated 406 reward is dependent on the environment 140 dynamics and receiver node mobility. The reward can be estimated as a ratio between and achievable performance metric and a target performance metric, for example achievable throughput and receiver node demanded throughput. The reward is than associated to each entry in the knowledge base linked with the transmitter-receiver pair and correlation coefficient.

Fig. 3 shows a suitable computing system 300 enabling to implement embodiments of the method for controlling communication channels between transmitter 100 and receiver 101 nodes in an UDN 140. Computing system 300 may in general be formed as a suitable general-purpose computer and comprise a bus 310, a processor 302, a local memory 304, one or more optional input interfaces 314, one or more optional output interfaces 316, a communication interface 312, a storage element interface 306, and one or more storage elements 308. Bus 310 may comprise one or more conductors that permit communication among the components of the computing system 300. Processor 302 may include any type of conventional processor or microprocessor that interprets and executes programming instructions. Local memory 304 may include a random-access memory (RAM) or another type of dynamic storage device that stores information and instructions for execution by processor 302 and/or a read only memory (ROM) or another type of static storage device that stores static information and instructions for use by processor 302. Input interface 314 may comprise one or more conventional mechanisms that permit an operator or user to input information to the computing device 300, such as a keyboard 320, a mouse 330, a pen, voice recognition and/or biometric mechanisms, a camera, etc. Output interface 316 may comprise one or more conventional mechanisms that output information to the operator or user, such as a display 340, etc. Communication interface 312 may comprise any transceiver-like mechanism such as for example one or more Ethernet interfaces that enables computing system 300 to communicate with other devices and/or systems, for example with the wireless feeder 130. The communication interface 312 of computing system 300 may be connected to such another computing system by means of a local area network (LAN) or a wide area network (WAN) such as for example the internet. Storage element interface 306 may comprise a storage interface such as for example a Serial Advanced Technology Attachment (SATA) interface or a Small Computer System Interface (SCSI) for connecting bus 310 to one or more storage elements 308, such as one or more local disks, for example SATA disk drives, and control the reading and writing of data to and/or from these storage elements 308. Although the storage element(s) 308 above is/are described as a local disk, in general any other suitable computer-readable media such as a removable magnetic disk, optical storage media such as a CD or DVD, -ROM disk, solid state drives, flash memory cards, ... could be used. Computing system 300 could thus correspond to the controller circuitry 131 in the embodiment illustrated by Fig. 1.

As used in this application, the term "circuitry" may refer to one or more or all of the following:

(a) hardware-only circuit implementations such as implementations in only analog and/or digital circuitry and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from
the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances.

**Claims**

1. A controller circuitry (131) configured to control communication channels (220-221, 230-233) between transmitter (100, 200-203) and receiver (101, 210-211) nodes in a ultra-dense network, UDN, (140), the controller circuitry (131) comprising means configured for:

   - monitoring (401) the communication channels of pairs of transmitter-receiver nodes;
   - determining (402) correlation coefficients for the pairs;
   - identifying (403) correlated pairs based on the correlation coefficients; and
   - disconnecting (404) the correlated pairs, and

   wherein the means are further configured to connecting (405) a receiver node of a disconnected pair to another transmitter node.

2. The controller circuitry (131) according to claim 1, wherein the means are further configured for:

   - storing (407) the correlation coefficients during consecutive predefined time-intervals; and

   wherein the identifying (403) of the correlated pairs is further based on the stored (407) correlation coefficients.

3. The controller circuitry (131) according to one of the preceding claims, wherein the means are further configured for:

   - calculating (406) a reward when the receiver node is connected to the other transmitter node; and

   wherein the storing (407) further comprises storing the reward for the transmitter-receiver pair.

4. The controller circuitry (131) according to one of the preceding claims, wherein the reward is based on the receiver node's mobility.

5. The controller circuity (131) according to claim 6, wherein the mobility is based on an achievable throughput over a demanded throughput of the receiver node.

6. The controller circuitry (131) according to one of the claims 3 to 5, wherein the identifying (403) of correlated pairs is further based on the rewards.

7. The controller circuitry (131) according to one of the preceding claims, wherein the monitoring (401) of the communication channels is performed for a cluster (110-112) of transmitter-receiver nodes in the UDN (140).

8. A method performed by a controller circuitry for controlling communication channels (220-221, 230-233) between transmitter (100, 200-203) and receiver (101, 210-211) nodes in an ultra-dense network, UDN, (140), comprising the steps of:

   - monitoring the communication channels of pairs of transmitter-receiver nodes in the UDN;
   - determining correlation coefficients for the pairs;
   - identifying correlated pairs based on the correlation coefficients; and
   - disconnecting the correlated pairs,

   wherein the method further comprises the step of connecting (405) a receiver node of a disconnected pair to another transmitter node.

9. A computer program product comprising computer-executable instructions, which when executed by a processor of a controller circuity (131), cause the controller circuitry (131) to perform at least the following:

   - monitoring (401) the communication channels of pairs of transmitter-receiver nodes in an ultra-dense network, UDN;

- determining (402) correlation coefficients for the pairs;
- identifying (403) correlated pairs based on the correlation coefficients;
- disconnecting (404) the correlated pairs, and wherein the computer-executable instructions further cause the controller circuitry to perform:
- connecting (405) a receiver node of a disconnected pair to another transmitter node.

10. A computer readable storage medium comprising computer-executable instructions for performing the following steps when the program is run on a controller circuitry (131):

- monitoring (401) the communication channels of pairs of transmitter-receiver nodes in an ultra-dense network, UDN;
- determining (402) correlation coefficients for the pairs;
- identifying (403) correlated pairs based on the correlation coefficients;
- disconnecting (404) the correlated pairs, and wherein the computer-executable instructions further cause the controller circuitry to perform:
- connecting (405) a receiver node of a disconnected pair to another transmitter node.

**Patentansprüche**

1. Steuerschaltung (131), die dazu ausgelegt ist, Kommunikationskanäle (220-221, 230-233) zwischen Sender(100, 200-203)- und Empfänger(101, 210-211)-Knoten in einem ultradichten Netzwerk, UDN, (140) zu steuern, wobei die Steuerschaltung (131) Mittel umfasst die zu Folgendem ausgelegt sind:

- Überwachen (401) der Kommunikationskanäle von Paaren von Sendeempfängerknoten;
- Bestimmen (402) von Korrelationskoeffizienten für die Paare;
- Identifizieren (403) von korrelierten Paaren auf Basis der Korrelationskoeffizienten; und
- Trennen (404) der korrelierten Paare, und

wobei die Mittel ferner dazu ausgelegt sind, einen Empfängerknoten eines getrennten Paares mit einem anderen Senderknoten zu verbinden (405).

2. Steuerschaltung (131) nach Anspruch 1, wobei die Mittel ferner zu Folgendem ausgelegt sind:

- Speichern (407) der Korrelationskoeffizienten während aufeinanderfolgenden vordefinierten Zeitintervallen; und

wobei das Identifizieren (403) der korrelierten Paare ferner auf den gespeicherten (407) Korrelationskoeffizienten basiert.

3. Steuerschaltung (131) nach einem der vorhergehenden Ansprüche, wobei die Mittel ferner zu Folgendem ausgelegt sind:

- Berechnen (406) einer Belohnung, wenn der Empfängerknoten mit dem anderen Senderknoten verbunden ist; und

wobei das Speichern (407) ferner das Speichern der Belohnung für das Sendeempfängerpaar umfasst.

4. Steuerschaltung (131) nach einem der vorhergehenden Ansprüche, wobei die Belohnung auf der Mobilität des Empfängerknotens basiert.

5. Steuerschaltung (131) nach Anspruch 6, wobei die Mobilität auf einem erreichbaren Durchsatz über einem geforderten Durchsatz des Empfängerknotens basiert.

6. Steuerschaltung (131) nach einem der Ansprüche 3 bis 5, wobei das Identifizieren (403) der korrelierten Paare ferner auf den Belohnungen basiert.

7. Steuerschaltung (131) nach einem der vorhergehenden Ansprüche, wobei das Überwachen (401) der Kommunikationskanäle für einen Cluster (110-112) von Sendeempfängerknoten im UDN (140) durchgeführt wird.

8. Verfahren, das von einer Steuerschaltung zum Steuern von Kommunikationskanälen (220-221, 230-233) zwischen Sender(100, 200-203)- und Empfänger(101, 210-211)-Knoten in einem ultradichten Netzwerk, UDN, (140) durchgeführt wird und die folgenden Schritte umfasst:

- Überwachen der Kommunikationskanäle von Paaren von Sendeempfängerknoten im UDN;
- Bestimmen von Korrelationskoeffizienten für die Paare;
- Identifizieren von korrelierten Paaren auf Basis der Korrelationskoeffizienten; und
- Trennen der korrelierten Paare,

wobei das Verfahren ferner den Schritt des Verbindens (405) eines Empfängerknotens eines getrennten Paares mit einem anderen Senderknoten umfasst.

9. Computerprogrammprodukt, das computerausführbare Anweisungen umfasst, die, wenn sie von einem Prozessor einer Steuerschaltung (131) ausgeführt werden, bewirken, dass die Steuerschaltung (131) mindestens Folgendes durchführt:

- Überwachen (401) der Kommunikationskanäle von Paaren von Sendeempfängerknoten in einem ultradichten Netzwerk, UDN;
- Bestimmen (402) von Korrelationskoeffizienten für die Paare;
- Identifizieren (403) von korrelierten Paaren auf Basis der Korrelationskoeffizienten;
- Trennen (404) der korrelierten Paare und wobei die computerausführbaren Anweisungen ferner bewirken, dass die Steuerschaltung Folgendes durchführt:
- Verbinden (405) eines Empfängerknotens eines getrennten Paares mit einem anderen Senderknoten.

10. Computerlesbares Speichermedium, das computerausführbare Anweisungen zum Durchführen der folgenden Schritte umfasst, wenn das Programm auf einer Steuerschaltung (131) ausgeführt wird:

- Überwachen (401) der Kommunikationskanäle von Paaren von Sendeempfängerknoten in einem ultradichten Netzwerk, UDN;
- Bestimmen (402) von Korrelationskoeffizienten für die Paare;
- Identifizieren (403) von korrelierten Paaren auf Basis der Korrelationskoeffizienten;
- Trennen (404) der korrelierten Paare und wobei die computerausführbaren Anweisungen ferner bewirken, dass die Steuerschaltung Folgendes durchführt:
- Verbinden (405) eines Empfängerknotens eines getrennten Paares mit einem anderen Senderknoten.

**Revendications**

1. Ensemble de circuits de dispositif de commande (131) configuré pour commander des canaux de communication (220-221, 230-233) entre des noeuds émetteurs (100, 200-203) et récepteurs (101, 210-211) dans un réseau ultra-dense, UDN, (140), l'ensemble de circuits de dispositif de commande (131) comprenant des moyens configurés pour :

- surveiller (401) les canaux de communication de paires de noeuds émetteurs-récepteurs ;
- déterminer (402) des coefficients de corrélation pour les paires ;
- identifier (403) des paires corrélées sur la base des coefficients de corrélation ; et
- déconnecter (404) les paires corrélées, et

dans lequel les moyens sont en outre configurés pour connecter (405) un noeud récepteur d'une paire déconnectée à un autre noeud émetteur.

2. Ensemble de circuits de dispositif de commande (131) selon la revendication 1, dans lequel les moyens sont en outre configurés pour :

- stocker (407) les coefficients de corrélation pendant des intervalles de temps prédéfinis consécutifs ; et

dans lequel l'identification (403) des paires corrélées est en outre basée sur les coefficients de corrélation stockés (407).

**3.** Ensemble de circuits de dispositif de commande (131) selon l'une des revendications précédentes, dans lequel les moyens sont en outre configurés pour :

- calculer (406) une récompense lorsque le noeud récepteur est connecté à l'autre noeud émetteur ; et

dans lequel le stockage (407) comprend en outre le stockage de la récompense pour la paire émetteur-récepteur.

**4.** Ensemble de circuits de dispositif de commande (131) selon l'une des revendications précédentes, dans lequel la récompense est basée sur la mobilité du noeud récepteur.

**5.** Ensemble de circuits de dispositif de commande (131) selon la revendication 6, dans lequel la mobilité est basée sur un débit réalisable par rapport à un débit demandé du noeud récepteur.

**6.** Ensemble de circuits de dispositif de commande (131) selon l'une des revendications 3 à 5, dans lequel l'identification (403) de paires corrélées est en outre basée sur les récompenses.

**7.** Ensemble de circuits de dispositif de commande (131) selon l'une des revendications précédentes, dans lequel la surveillance (401) des canaux de communication est réalisée pour une grappe (110-112) de noeuds émetteurs-récepteurs dans l'UDN (140).

**8.** Procédé réalisé par un ensemble de circuits de dispositif de commande pour commander des canaux de communication (220-221, 230-233) entre des noeuds émetteurs (100, 200-203) et récepteurs (101, 210-211) dans un réseau ultra-dense, UDN, (140), comprenant les étapes :

- de surveillance des canaux de communication de paires de noeuds émetteurs-récepteurs dans l'UDN ;
- de détermination de coefficients de corrélation pour les paires ;
- d'identification de paires corrélées sur la base des coefficients de corrélation ; et
- de déconnexion des paires corrélées,

dans lequel le procédé comprend en outre l'étape de connexion (405) d'un noeud récepteur d'une paire déconnectée à un autre noeud émetteur.

**9.** Produit de programme informatique comprenant des instructions exécutables par ordinateur, qui, lorsqu'elles sont exécutées par un processeur d'un ensemble de circuits de dispositif de commande (131), amènent l'ensemble de circuits de dispositif de commande (131) à réaliser au moins ce qui suit :

- la surveillance (401) des canaux de communication de paires de noeuds émetteurs-récepteurs dans un réseau ultra-dense, UDN ;
- la détermination (402) de coefficients de corrélation pour les paires ;
- l'identification (403) de paires corrélées sur la base des coefficients de corrélation ;
- la déconnexion (404) des paires corrélées, et dans lequel les instructions exécutables par ordinateur amènent en outre l'ensemble de circuits de dispositif de commande à réaliser :
- la connexion (405) d'un noeud récepteur d'une paire déconnectée à un autre noeud émetteur.

**10.** Support de stockage lisible par ordinateur comprenant des instructions exécutables par ordinateur pour réaliser les étapes suivantes lorsque le programme est exécuté sur un ensemble de circuits de dispositif de commande (131) :

- surveiller (401) les canaux de communication de paires de noeuds émetteurs-récepteurs dans un réseau ultra-dense, UDN ;
- déterminer (402) des coefficients de corrélation pour les paires ;
- identifier (403) des paires corrélées sur la base des coefficients de corrélation ;
- déconnecter (404) les paires corrélées, et dans lequel les instructions exécutables par ordinateur amènent en outre l'ensemble de circuits de dispositif de commande à réaliser :
- la connexion (405) d'un noeud récepteur d'une paire déconnectée à un autre noeud émetteur.

Fig. 1

Fig. 2

Fig. 3

MONITORING — 401

DETERMINING — 402

IDENTIFYING — 403

DISCONNECTING — 404

CONNECTING — 405

CALCULATING — 406

STORING — 407

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015109441 A1

**Non-patent literature cited in the description**

- **N. NADERIALIZADEH ; H. NIKOPOUR ; O. ORHAN ; S. TALWAR.** Feedback-Based Interference Management in Ultra-Dense Networks via Parallel Dynamic Cell Selection and Link Scheduling,. *2018 IEEE International Conference on Communications (ICC), Kansas City, MO,* 2018, 1-6